# FASCICULE DE BREVET EUROPEEN

(11) **EP 3 563 067 B1**
(45) Date de publication et mention de la délivrance du brevet: **28.02.2024**
(21) Numéro de dépôt: 17825548.5
(22) Date de dépôt: 27.12.2017
(51) Int. Cl.: F16B 2/08, H01Q 1/28

(54) **DISPOSITIF DE CERCLAGE**
BÄNDELUNGSVORRICHTUNG
BANDING DEVICE

(30) Priorité: 27.12.2016 FR 1601876
(43) Date de publication de la demande: 06.11.2019
(73) Titulaire: THALES, 92190 Meudon (FR)
(72) Inventeur: CADALEN, François, 06903 Sophia Antipolis Cedex (FR); FRAISSE, Yohann, 06903 Sophia Antipolis Cedex (FR); WARNAN, François, 06903 Sophia Antipolis Cedex (FR)
(74) Mandataire: Atout PI Laplace
(86) Numéro de dépôt international: PCT/EP2017/084637
(87) Numéro de publication internationale: WO 2018/122257

(56) Documents cités:
- WO-A2-2011/091135
- DE-A1-102006 029 242
- FR-A1- 2 373 707
- GB-A- 851 954

## Description

La présente invention se rapporte à un dispositif de cerclage permettant de cercler un objet.

Ce type de dispositif est notamment mis en oeuvre dans des dispositifs de détection pour la lutte héliportée contre les menaces sousmarines dans lesquels une antenne pour détecter des menaces sousmarines est suspendue à une plateforme aérienne comme par exemple un aéronef qui permet d'immerger l'antenne. L'antenne comprend les émetteurs et les récepteurs proprement dits et éventuellement des équipements électroniques associés aux émetteurs et récepteurs. Elle peut comprendre également des capteurs d'environnement. De plus, à bord de la plateforme aérienne, le dispositif de détection comprend des équipements nécessaires à la génération des signaux acoustiques et au traitement des données acoustiques reçues.

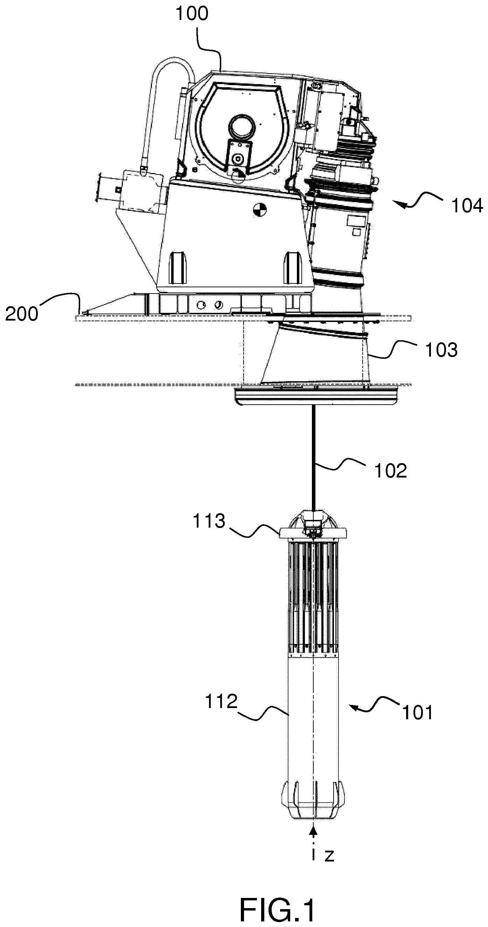

Un exemple de dispositif de détection est représenté sur la figure 1. Il comprend un treuil 100 destiné à être installé dans une plateforme aérienne. Le dispositif de lutte aéroportée comprend une antenne 101 suspendue au bout d'un câble électro-tracteur 102 du treuil 100, éventuellement doté d'un entonnoir 103 (ou « funnel » en terminologie anglo-saxonne) comme c'est le cas sur la figure 1. Le treuil 100 est destiné à effectuer le déploiement et la récupération de l'antenne 101. Sur la figure 1 le treuil 100 est fixé sur un plancher 200 d'une plateforme aérienne. Le câble électro-tracteur 102 permet de véhiculer des signaux ainsi que l'énergie électrique nécessaire à l'émission acoustique et/ou au fonctionnement des récepteurs. En déroulant le câble 102 à l'aide du treuil 100, l'antenne 101 est descendue, au travers de l'éventuel entonnoir 103 dans l'eau. Enrouler le câble 102 permet de remonter l'antenne 101 dans la plateforme aérienne au sein de l'éventuel entonnoir 103 comme représenté sur la figure 1.

L'antenne 101 présente une forme de dôme allongé essentiellement cylindrique. Elle comprend un corps allongé 112 présentant une circonférence extérieure de section sensiblement circulaire dans un plan perpendiculaire à l'axe longitudinal z de l'antenne 101. Le corps allongé 112 est entouré d'une structure de protection 113 (ou « bumper » en terminologie anglo-saxonne) présentant une circonférence extérieure de section sensiblement circulaire dans un plan perpendiculaire à l'axe longitudinal z de l'antenne 101. La circonférence extérieure de la structure de protection 113 et la circonférence extérieure du corps allongé 112 sont sensiblement concentriques. Elle s'étend selon un axe longitudinal z. Lorsque l'antenne 101 est suspendue par son propre poids au câble 102, ce dernier s'étend également selon l'axe longitudinal z.

Maintenir l'antenne 101 à poste dans la plateforme aérienne uniquement par le câble 102 ne permet pas d'obtenir un niveau de sécurité suffisant lorsque la plateforme aérienne est en transit notamment au-dessus de zones habitées. Le câble 102 peut se casser, il peut être coupé accidentellement par la cisaille pyrotechnique de sécurité, le frein du treuil 100 peut lâcher et libérer accidentellement le câble. La perte de l'antenne 101 signifie une perte financière importante, mais surtout, sa masse importante pourrait tomber en mer ou au sol en causant de graves dommages matériels ou humains.

La position de l'antenne 101 par rapport au treuil 100 doit être verrouillée lorsqu'elle est à poste à bord de la plateforme aérienne. Le dispositif de détection comprend alors avantageusement un dispositif de cerclage 104. Ce dispositif de cerclage 104 permet de verrouiller la position de l'antenne 101 par rapport au treuil 100 afin d'empêcher une chute accidentelle de l'antenne et ses conséquences.

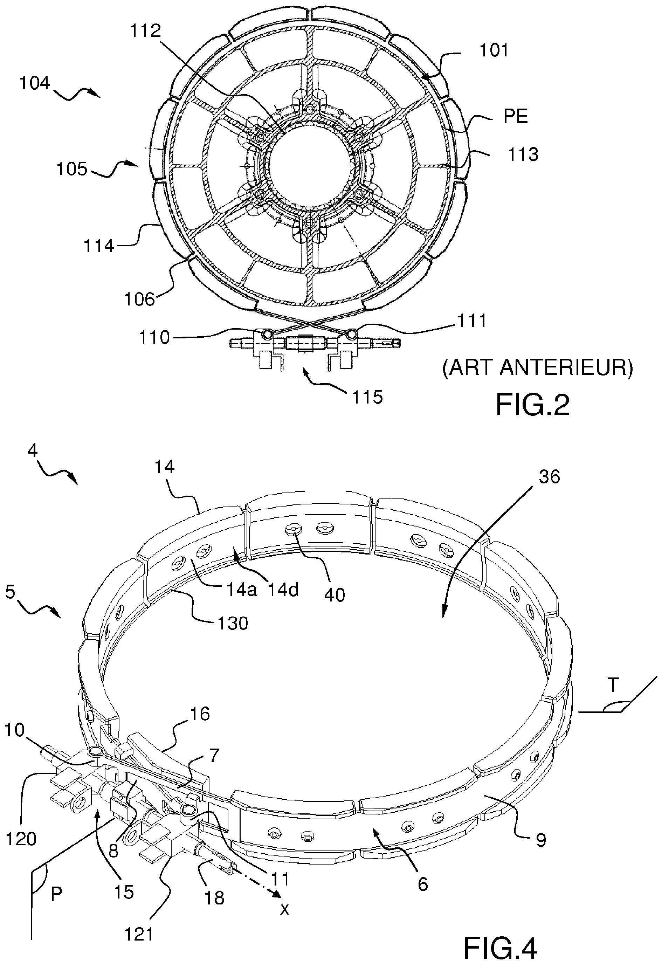

Un dispositif de cerclage de l'art antérieur 104 est représenté sur la figure 2. Il comprend un cerclage 105 comprenant une bande de serrage 106 et des patins 114 destinés à être interposés entre la structure de protection 113 et une portion circulaire de la bande de serrage 106. Il comprend également un dispositif d'entraînement 115 permettant déplacer des extrémités longitudinales 110 et 111 de la bande de serrage 106 l'une par rapport à l'autre pour réduire la taille de la boucle de sorte à pouvoir venir enserrer un objet, par exemple la structure de protection 113 de l'antenne 101, lors d'une étape dite de serrage, ou augmenter la taille de la boucle de sorte à pouvoir desserrer ou libérer un objet initialement enserré par le cerclage 105, lors d'une étape dite de desserrage.

Maintenir l'antenne à poste nécessite d'effectuer un serrage important du cerclage 105 autour de la structure de protection 113. Or, le demandeur a constaté des déformations de la structure de protection ayant pu engendrer des dommages irréversibles sur la structure de protection et également libérer l'antenne du cerclage et entrainer sa chute.

Des dispositifs de cerclage de l'art antérieur sont décrit dans les documents FR 2 373 707 A1 et WO 2011/091135 A1.

Un but de la présente invention est de limiter l'inconvénient précité.

A cet effet, l'invention se rapporte à un dispositif de cerclage pour ceinturer un objet présentant une section présentant un périmètre de forme régulière, ledit dispositif comprenant un cerclage comprenant une bande de serrage formant une boucle destinée à entourer l'objet, la bande de serrage comprenant une partie centrale présentant une forme suivant sensiblement une forme du périmètre de la section de l'objet et deux brins de bande comprenant les extrémités respectives de la bande de serrage et présentant une forme s'écartant de la forme du périmètre de la section de l'objet, le cerclage comprenant au moins un patin dit central monté sur au moins un brin de bande de façon à être destiné à être interposé entre l'objet et le brin de bande, le dispositif de cerclage comprenant un bâti et un dispositif de serrage/desserrage permettant d'élargir la taille de la boucle et/ou de réduire la taille de la boucle et étant configuré pour déplacer les extrémités de la bande de serrage de façon sensiblement symétrique par rapport à un plan de symétrie lié au bâti, le patin central étant monté sur le bâti de façon à occuper une position fixe par rapport au bâti selon une direction sensiblement perpendiculaire au plan de symétrie.

Avantageusement, un volume libre est créé entre une forme régulière définie par la partie centrale et les brins de bande, le patin central occupant une partie du volume libre.

Avantageusement, le patin est monté flottant le long du brin de bande pour pouvoir coulisser selon une direction longitudinale du brin de bande.

Avantageusement, le patin central est monté coulissant le long du brin de bande par coopération de forme entre le patin central et le brin de bande.

Avantageusement, le patin central comprend une partie d'interface destinée à être interposée entre le brin de bande et l'objet, la partie d'interface s'épaississant le long du brin de bande vers l'autre brin.

Avantageusement, le patin central présente une partie d'interface, destinée à être interposée entre le brin de bande et l'objet à enserrer, comprenant une face externe faisant face au brin de bande, la face externe suivant sensiblement la forme du brin de bande selon la direction longitudinale du brin de bande.

Avantageusement, la forme du patin central est définie de façon que le patin central vienne faire dévier le brin de bande lorsqu'un objet présentant la section de forme régulière et un diamètre prédéterminé est serré par le cerclage de sorte qu'un effort de serrage est exercé sur l'objet par le brin de bande.

Avantageusement, la forme du patin central est définie de façon que lorsque l'objet est serré par le cerclage, un effort de serrage sensiblement uniforme est exercé sur le patin sensiblement sur toute la circonférence de l'objet. De façon plus générale, le patin central est configuré de sorte que lorsque l'objet est serré par le cerclage, un effort de serrage sensiblement uniforme est exercé sur le patin sensiblement sur toute la circonférence de l'objet

Avantageusement, la partie centrale décrit sensiblement un arc de cercle. Avantageusement, le patin central comprend une partie d'interface destinée à être interposée entre la bande de serrage et l'objet à enserrer, la partie d'interface comprenant une face destinée à faire face à l'objet et décrivant sensiblement un arc de cercle.

Avantageusement, le cerclage comprend plusieurs patins conventionnels montés sur la partie centrale de sorte à être destinés à s'étendre entre la bande de serrage et l'objet.

Avantageusement, chaque patin conventionnel adjacent au patin central comprend une partie d'interface destinée à être interposée entre la partie centrale et l'objet à enserrer, le patin central comprenant une partie d'interface destinée à être interposée entre le brin de bande et l'objet à enserrer, la partie d'interface du patin central présentant au niveau de chaque extrémité adjacente à un patin conventionnel, une épaisseur sensiblement égale à une épaisseur d'une extrémité de la partie d'interface, du patin adjacent, située en regard du patin central.

Avantageusement, l'épaisseur d'une partie d'interface du patin central, destinée à être interposée entre le brin de bande et l'objet selon une direction radiale d'un cercle défini par la partie centrale, est supérieure à la distance séparant ce cercle et le brin de bande selon cette direction radiale en l'absence d'objet.

Avantageusement, un jeu maximal prévu entre le patin central et chaque patin conventionnel adjacent au patin central, en fonctionnement opérationnel, est supérieur au jeu maximal entre deux patins conventionnels adjacents.

Avantageusement, le patin central est monté de façon amovible sur la bande de serrage uniquement par coopération de forme entre le patin central et la bande de serrage.

Avantageusement, le dispositif comprend un limiteur de course permettant d'empêcher qu'une taille de la boucle ne descende en dessous d'une taille minimale prédéterminée ou ne dépasse une taille maximale prédéterminée en fonctionnement opérationnel, le limiteur de course étant neutralisable, le patin central et la bande de serrage étant configurés de façon que le patin central puisse être séparé du brin de bande, et plus généralement de la bande, uniquement lorsque la taille de la boucle est inférieure à la taille minimale ou respectivement lorsque la taille de la boucle est supérieure à la taille maximale.

Avantageusement, le patin est mobile radialement par rapport au bâti.

Avantageusement, le dispositif de cerclage comprend un dispositif de serrage/desserrage permettant de tirer ou de pousser sur les extrémités des brins de bande de façon à les déplacer l'une par rapport à l'autre.

Avantageusement, le patin central est en appui sur les deux brins de bande de façon à être destiné à être interposé entre les deux brins de bande et l'objet à enserrer.

Avantageusement, la bande de serrage comprend deux brins de bande se croisant de sorte que la bande de serrage définisse une boucle fermée destinée à ceinturer l'objet.

Avantageusement, le patin central est en appui sur les deux brins de bande de part et d'autre de la zone de croisement et à distance de la zone de croisement.

L'invention se rapporte également à un dispositif de détection comprenant un dispositif de cerclage, une antenne étant l'objet à ceinturer et un treuil comprenant un câble, l'antenne étant suspendue au câble et le dispositif de cerclage étant suspendu au treuil.

L'invention sera mieux comprise à l'étude de quelques modes de réalisation décrits à titre d'exemples nullement limitatifs, et illustrés par des dessins annexés sur lesquels :
- la figure 1 déjà décrite représente schématiquement un dispositif de détection,
- la figure 2 déjà décrite représente schématiquement en coupe selon un plan transverse, un dispositif de cerclage de l'art antérieur encerclant une antenne d'un dispositif de détection,
- la figure 3 représente schématiquement le cerclage selon l'invention, en coupe selon un plan transverse T représenté sur la figure 4, des éléments du dispositif d'entraînement sont représentés en perspective,
- la figure 4 représente schématiquement en perspective le dispositif de cerclage selon l'invention, tous les éléments du dispositif de serrage/desserrage apparaissant sur la figure 3 ne sont pas représentés,
- la figure 5 représente schématiquement en perspective le dispositif de cerclage selon l'invention avec son bâti,
- les figures 6 et 7 représentent schématiquement deux vues plus précises de la zone de croisement.

D'une figure à l'autre les mêmes éléments sont désignés par les mêmes références numériques.

L'invention concerne un dispositif de cerclage 4 destiné à être intégré dans un dispositif de lutte aéroportée tel que décrit précédemment. L'invention concerne aussi le dispositif de lutte aéroportée ou dispositif de détection tel que représenté sur la figure 1 comprenant le dispositif de cerclage 4 selon l'invention. Le dispositif de lutte aéroportée selon l'invention diffère de celui de la figure 1 par le dispositif de cerclage 4. Le dispositif de cerclage 4 peut de manière plus générale être utilisé pour enserrer tout type d'objet, de préférence à section circulaire.

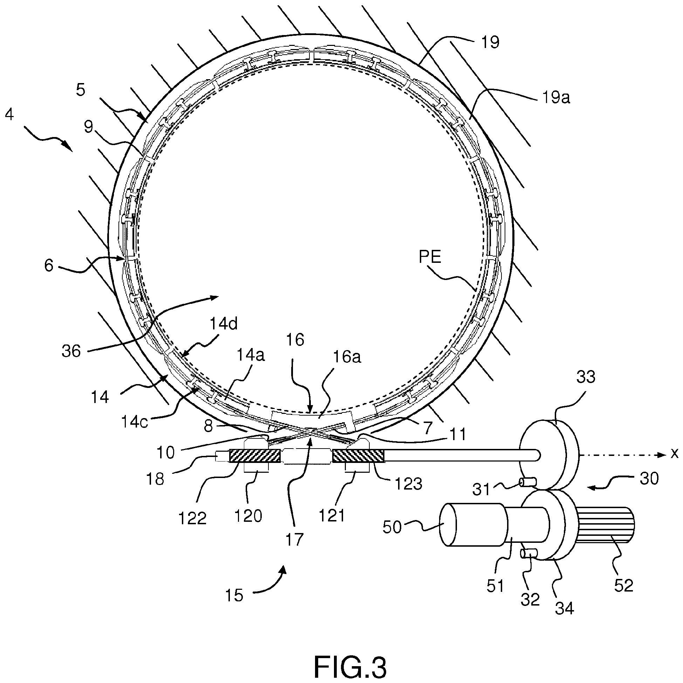

Comme visible sur la figure 3, le dispositif de cerclage 4 comprend un cerclage 5 adapté pour ceinturer un objet, par exemple l'antenne 101, permettant d'enserrer ou de libérer l'objet. Le cerclage 5 comprend une bande de serrage 6 formant une boucle destinée à entourer l'antenne 101 dont le périmètre externe PE est représenté en pointillés. Ce périmètre PE présente une section circulaire dans le plan T.

La boucle s'étend sensiblement dans un plan transverse T représenté sur la figure 4. Ce plan est le plan moyen de la bande de serrage 6. Le dispositif cerclage 5 est avantageusement suspendu au treuil 102 de façon que le plan transverse T soit destiné à s'étendre sensiblement perpendiculairement à l'axe longitudinal z de l'antenne 101 qui est un axe vertical (la verticale étant définie par rapport à un référentiel terrestre).

Le dispositif de cerclage 4 comprend également un dispositif de serrage/desserrage 15. La bande de serrage 6 s'étend entre deux extrémités longitudinales 10 et 11 visible sur la figure 4. Le dispositif de serrage /desserrage 15 permet de déplacer les extrémités longitudinales 10 et 11 de la bande de serrage 6 relativement l'une par rapport à l'autre pour réduire la taille de la boucle de sorte à pouvoir venir enserrer un objet, par exemple l'antenne 101, lors d'une étape dite de serrage, ou augmenter la taille de la boucle de sorte à pouvoir desserrer ou libérer un objet initialement enserré par la bande de serrage 6 lors d'une étape dite de desserrage. La variation de la taille de la boucle est une variation de la longueur du périmètre, c'est-à-dire du diamètre de la boucle. Le raccourcissement du périmètre de la boucle qui se produit lors du serrage, engendre une pression sur l'objet à enserrer et crée un assemblage par serrage entre la bande de serrage et l'objet. Pour maintenir le serrage de l'objet, le dispositif de serrage/desserrage maintient des efforts de traction sur les extrémités 10 et 11.

La bande de serrage 6 comprend une partie centrale 9 et deux brins de bande 7 et 8 comprenant chacun une des extrémités 10 ou 11 de la bande de serrage 6. Les brins de bande 7 et 8 sont reliés l'un à l'autre par la partie centrale 9 s'étendant longitudinalement entre les deux brins. La partie centrale 9 présente une forme destinée à suivre sensiblement une forme du périmètre PE de la section l'objet à enserrer. Autrement dit, la partie centrale 9 s'étend sensiblement parallèlement au périmètre. La forme de la partie centrale 9 qui suit celle du périmètre est la forme de la section de la partie centrale 9 dans le plan transverse T et plus particulièrement de la section de la face interne de la partie centrale 9 qui est destinée à faire face à l'objet. La forme de la partie centrale 9 suit la forme d'une partie du périmètre PE de la section l'objet 101 à enserrer. La partie centrale 9 présente une forme régulière. Les deux brins de bande 7 et 8 présentent chacun une forme qui s'écarte de la forme régulière du périmètre de l'objet, c'est-à-dire de la forme suivie par la partie centrale 9. Autrement dit, la section de chaque brin 7, 8 dans le plan T, présente une forme qui s'écarte de la forme de la section de la partie centrale 9 dans le plan T. Autrement dit, la forme de la section de la face interne de chaque brin destinée à faire face à l'objet s'éloigne de la forme de la section de la face interne de la partie centrale 9 dans le plan T. La boucle présente une forme irrégulière dans le plan T. Un volume libre est alors crée, lors du serrage d'un objet, entre l'objet serré par le cerclage 5 et les brins de bande 7, 8, ce qui peut conduire à une déformation de l'objet susceptible de libérer l'objet. Autrement dit, un volume libre est créé entre la forme régulière définie par la partie centrale 9 et les brins de bande 7 et 8.

Afin de pallier cet inconvénient, le cerclage selon l'invention comprend au moins un patin 16 dit patin central monté sur au moins un brin de bande 7 et/ou 8 de façon à être destiné à être interposé entre l'objet et la bande de serrage et plus particulièrement entre l'objet et le brin de bande. Sur l'exemple des figures, le patin 16 est monté sur les deux brins. Il permet de combler une partie du volume libre laissé entre les brins de bande 7, 8, et l'objet et ainsi limiter la déformation de l'objet. Autrement dit, le patin central 16, comble une partie du volume libre laissé entre la forme régulière suivie par la partie centrale 9 et les brins de bande 7 et 8. Le patin central 16 assure une retenue de l'objet à enserrer ce qui va limiter sa déformation lors du serrage.

Avantageusement, la forme de la partie centrale 9 suit sensiblement la forme du périmètre de l'objet sur l'essentiel du périmètre de l'objet 101 de sorte à entourer l'essentiel de l'objet ou la quasi-totalité de l'objet.

Sur la réalisation des figures, les brins de bande 7 et 8 viennent se croiser en une zone de croisement 17 pour que la bande de serrage 6 définisse une boucle fermée destinée à entourer complètement l'objet à enserrer. Les brins de bande 7, 8 forment un X dans le plan T. L'utilisation d'une bande formant une boucle fermée par croisement de deux brins de bande 7 et 8 permet de faire varier de façon significative la taille de la boucle et ainsi de venir enserrer et libérer des objets présentant des diamètres différents. Cette configuration permet de faciliter la réalisation et le montage du dispositif de serrage/desserrage 15 car les deux extrémités libres 10 et 11 ne se trouvent pas sur une même droite que la zone de croisement 17. Le X comprend deux extrémités reliées l'une à l'autre par la partie centrale 9 et deux extrémités qui sont les extrémités 10 et 11. La distance entre les deux extrémités 10 et 11 selon l'axe x augmente lors du serrage et diminue lors du desserrage et le diamètre du cercle défini par la partie centrale 9 diminue et augmente respectivement. Lorsque la taille de la boucle varie, l'angle formé entre les brins de bande varie. En variante, la boucle est ouverte.

Lorsque périmètre PE est circulaire, la partie centrale 9 décrit sensiblement un arc de cercle dans le plan T comme sur la figure 3. Les brins de bande 7, 8 forment un X dans le plan T. Ainsi l'espace 36 entouré complètement par la boucle fermée formée par la bande de serrage 6 présente, dans le plan transverse T, une section sensiblement en forme de goutte d'eau présentant une partie circulaire et une partie pointue définie par les brins de bande 7, 8. Le patin central 16 comble une partie de la partie pointue. Si la boucle est ouverte et la partie centrale décrit sensiblement un arc de cercle, l'espace entouré par la présente, dans le plan transverse T, une forme de goutte d'eau tronquée présentant une partie circulaire et une partie pointue tronquée délimitée par les brins 7, 8. Le patin comble une partie de la partie pointue tronquée.

Sur la réalisation des figures, les deux brins 7 et 8 s'étendent longitudinalement sensiblement selon des droites respectives. Autrement dit, les deux brins de bande 7 et 8 présentent des sections sensiblement rectilignes dans le plan transverse T. Ces droites sont inclinées l'une par rapport à l'autre de sorte à former le X. Les brins 7, 8 ne suivent pas forcément une forme rectiligne, ils pourraient suivre une courbe dont le rayon de courbure augmente de la partie centrale 9 vers leurs extrémités libres 10 et 11 respectives ou vers la zone de croisement 17. De manière générale, les brins de bande 7, 8 présentent dans le plan T, un rayon de courbure supérieur à celui de la partie centrale 9 au niveau des extrémités des brins respectifs.

L'invention s'applique à tout objet présentant une section dont le périmètre présente une forme régulière. Le périmètre présente avantageusement une forme de ligne courbe convexe fermée, pouvant être un cercle ou différente d'un cercle et pouvant présenter ou non un centre de symétrie. En variante la forme régulière est un polygone régulier comme un hexagone. La forme de la partie centrale 9 dans le plan T peut alors être sensiblement une ligne courbe convexe et les brins de bande 7 et 8 s'éloignent de cette ligne courbe. Les brins de bande présentent, dans le plan T, un rayon de courbure supérieur à celui de la partie centrale 9 en extrémité des brins de bande 7 et 8. Les brins de bande 7 et 8 viennent se croiser en X ou se rapprocher l'un de l'autre, en formant par exemple un V tronqué, pour réduire l'ouverture de la boucle ouverte formée par la partie centrale 9 en s'éloignant de la forme de la partie centrale 9. La boucle formée par la bande de serrage 6 entoure par exemple une ligne courbe convexe fermée, la partie centrale 9 délimite une partie de cette ligne courbe et les brins de bande 7 et 8 délimitent une excroissance, par exemple en X ou en V tronqué sur la ligne courbe convexe fermée.

La bande 6 comprend par exemple un feuillard métallique ou une bande en matière ou plastique ou en matériau composite. La taille de la boucle varie lors du serrage par une variation de la flexion de la bande. La bande 6 présente avantageusement une forme au repos telle que la forme de la partie centrale 9 suit sensiblement la forme du périmètre de l'objet à enserrer. Les brins 7 et 8 présentent chacun, au repos, une forme qui s'en éloigne, par exemple, une forme sensiblement rectiligne au repos. La bande peut être formée par un assemblage de pièces ou être monobloc.

Le dispositif est destiné à venir enserrer un objet dans des conditions de fonctionnement opérationnel. En fonctionnement opérationnel, la taille de la boucle est comprise entre une taille minimale et une taille maximale. Le rayon de courbure moyen de la partie centrale 9 entre ces deux limites est avantageusement le rayon de courbure moyen de l'objet à enserrer. La distance entre les extrémités 10 et 11 est alors comprise entre une distance minimale et une distance maximale.

Sur la réalisation des figures, le cerclage 5 comprend un unique patin central 16 monté sur les deux brins de bande 7 et 8 de façon à être interposé entre les deux brins de bande 7 et 8 et l'objet à enserrer. Lorsque les brins 7, 8 se croisent, le patin central 16 est destiné à être interposé entre la zone de croisement 17 et l'objet à enserrer. En variante, le cerclage 5 comprend un ou plusieurs patins centraux, chacun étant en appui sur un seul des brins 7 ou 8. Il comprend par exemple deux patins centraux, dont un premier patin en appui sur un brin de bande 7 et un deuxième patin en appui sur le brin de bande 8. Les caractéristiques décrites dans la présente demande de brevet relativement au patin central en appui sur deux brins de bande s'appliquent au cas où le patin est en appui sur un seul brin mais sont définies par rapport à ce seul brin.

Le patin central 16 présente une partie d'interface 16a visible sur la figure 3 située à l'intérieur de l'espace 36 délimité par la boucle. La partie d'interface 16a est destinée à être interposée entre l'objet 101 et les brins 7 et 8. La partie 16a s'étend depuis le brin 7 jusqu'au brin 8 à l'intérieur de l'espace 36. En variante, la partie 16a s'étend le long d'un unique brin 7 ou 8.

Avantageusement, la partie d'interface 16a s'épaissit le long de chaque brin de bande 7 et/ou 8 sur laquelle elle est en appui, en s'éloignant de la partie centrale 9, c'est-à-dire, en s'éloignant de l'extrémité du brin reliée à la partie centrale, vers l'autre brin. Dans le cas où les brins se croisent, la partie d'interface s'épaissit le long de chaque brin de bande sur laquelle elle est en appui, vers zone de croisement 17. Cette forme permet de remplir un maximum du volume libre ce qui limite encore sa déformation.

La partie d'interface 16a présente une face externe 16e destinée à faire face aux brins de bande 7 et 8 et une face interne 16d destinée à être en regard d'un objet à enserrer.

Avantageusement, la partie d'interface 16a du patin 16 monté sur les deux brins de bande 7 et 8 présente, dans le plan transverse T, une épaisseur plus importante dans sa partie centrale qu'au niveau de ses deux extrémités 16b et 16c. L'épaisseur de la partie d'interface 16a est une distance, dans le plan transverse T, entre la face interne 16d et la face externe 16e selon une direction radiale, c'est-à-dire un axe radial de la boucle. Cela est valable aussi pour les patins conventionnels qui seront définis ultérieurement. Dans une variante, la partie d'interface 16a du patin central 16 présente une épaisseur fixe entre ses deux extrémités 16b, 16c.

Sur la réalisation des figures, la section de la face interne 16d dans le plan transverse T est avantageusement sensiblement une portion de cercle de diamètre D (diamètre de l'objet à enserrer). Cela permet d'assurer une bonne conformation du patin central à la forme de l'objet circulaire 101. De façon générale, la section de la face interne 16d suit avantageusement la forme du périmètre de l'objet à enserrer en regard du patin 16. La section de la face externe 16e dans le plan T présente alors un rayon de courbure variable dans le plan transverse T pour un patin d'épaisseur variable le long du ou des brin(s) de bande.

Avantageusement, la face externe 16 suit sensiblement la forme du ou des brin(s) de bande sur le(s)quel(s) il est en appui, dans le plan T, c'est-à-dire selon la direction longitudinale ou (ou des) brin(s) de bande. La zone d'appui s'étend alors le long du brin de bande.

Sur la réalisation particulière des figures, la face externe 16e forme, dans le plan T, un V pointant vers la zone de croisement 17.

La face externe 16e forme par exemple, dans le plan transverse T, une courbe comprenant deux parties de même longueur, c'est-à-dire de même ouverture angulaire, et présentant un deuxième rayon de courbure supérieur au premier rayon de courbure. Ces parties sont reliées par une zone centrale de la partie d'interface présentant un troisième rayon de courbure plus petit que le deuxième rayon de courbure. En variante, le rayon de courbure de la face interne est variable dans le plan transverse T et celui de la face externe est fixe. Dans une autre variante, les rayons de courbure des deux faces, dans le plan transverse T, sont variables. Avantageusement, comme c'est le cas sur les figures, la section de la partie d'interface 16a dans le plan T présente un plan de symétrie.

Avantageusement, le patin central 16 est configuré et plus précisément, sa partie d'interface 16a est configurée de sorte qu'un effort de serrage est exercé sur un objet à section circulaire de diamètre prédéterminé D par les brins de bande 7, 8, via le patin central 16, lorsque cet objet est enserré par la bande de serrage 6. Autrement dit, on définit la forme du patin central 16, compte tenu de son épaisseur de sorte à obtenir cette déviation. Cette forme est avantageusement définie de façon que le patin vienne faire dévier, c'est à dire courber ou faire varier la courbure des brins de bande 7, 8 de sorte à obtenir cet effort de serrage (présentant une composante radiale). Les brins 7 et 8 vont fléchir des deux côtés de la zone de croisement 17, ils ne présentent plus une section droite. Cela permet encore de limiter la déformation de l'objet vers les brins de bande en uniformisant la pression ou l'effort de serrage exercé sur l'objet 101. Cet effort de serrage présente au moins une composante radiale. Il est exercé via la partie d'interface 16a. Ainsi l'épaisseur de la partie d'interface 16a selon une direction radiale d'un cercle délimité par la partie centrale 9 de la bande est avantageusement supérieure à la distance séparant ce cercle et un des brins de bande selon cette direction radiale en l'absence d'objet. La variation d'épaisseur de la partie d'interface 16a le long des brins de bande dépend de la rigidité de la bande de serrage et de l'effort de serrage maximal que l'on souhaite appliquer sur l'objet.

Toutefois, si la forme du patin 16 est mal définie, le patin 16 peut être amené à reprendre tous les efforts et la déformation de l'objet peut avoir lieu dans la direction opposée au patin 16. De préférence, la forme du patin central 16 (ou des patins centraux quand il y en a plusieurs) et définie de façon qu'une contrainte sensiblement homogène est exercée sur un objet à section circulaire de diamètre prédéterminé D sensiblement sur toute la circonférence de l'objet lorsque l'objet est enserré par la bande de serrage 6. Autrement dit, cette contrainte est radiale et sensiblement de même module tout autour de l'objet. Cela permet de minimiser la déformation de l'objet en uniformisant la pression ou l'effort de serrage exercé sur l'objet 101.

Plus généralement, le patin central 16 est configuré, et plus précisément la partie d'interface est configurée, de façon que le patin central 16 vienne faire dévier le(s) brin(s) de bande sur le(s)quel(s) il est en appui lorsqu'un objet dont la section présente la forme régulière sensiblement suivie par la partie centrale 9 et un diamètre prédéterminé est serré par la bande de serrage, de façon qu'il(s) applique(nt) un effort de serrage sur l'objet, via le patin 16. Cette configuration comprend la forme et l'épaisseur du patin ou de sa partie d'interface, c'est-à-dire sa forme compte tenu de son épaisseur.

Avantageusement, le patin central 16 est en appui sur la bande de serrage 6 de part et d'autre de la zone de croisement 17 et se trouve à distance de la zone de croisement 17. Autrement dit, le patin central 16 est en appui sur la bande de serrage 6 au niveau des deux extrémités 16b, 16c de la partie d'interface 16a. La première extrémité 16b est en contact avec le premier brin 7 et la deuxième extrémité 16c est en contact avec le deuxième brin 8. Le patin central 16 est situé à distance de la bande de serrage 6 en regard de la zone de croisement 17. L'épaisseur de la partie d'interface 16a du patin central 16 est définie de façon à vérifier cette caractéristique. Cette caractéristique est avantageusement vérifiée en fonctionnement opérationnel. En fonctionnement opérationnel l'angle formé entre les deux brins de bande 7 et 8 à l'extérieur de la boucle est supérieur ou égal à une valeur minimale prédéterminée. Cette valeur minimale dépend d'une taille minimale de la boucle en fonctionnement opérationnel (c'est-à-dire d'une distance maximale entre les deux extrémités dans le cas des figures), du diamètre D de l'objet et de la rigidité de la bande de serrage. L'angle entre les deux brins du cerclage diminue pour deux raisons : d'abord, le dispositif de serrage éloigne les extrémités libres des brins de la bande de serrage l'une de l'autre, ensuite l'ensemble formé par la bande de cerclage et l'objet serré par la bande cherche à se déplacer latéralement vers le dispositif de serrage qui est fixe (l'objet enserré ne reste pas au centre du bâti). Cette configuration permet de faciliter la réalisation du patin. En effet, il n'est pas nécessaire, pour uniformiser l'effort de serrage, que la forme du patin épouse la forme déformée des brins de bande 7 et 8 lorsque l'objet de diamètre D est enserré.

Avantageusement, la partie d'interface 16a est en appui sur le brin 7 sur environ un tiers de la longueur du patin 16 et en appui sur le brin 8 sur environ un tiers de la longueur du patin 16. Le patin central 16 est donc situé à distance de la bande de serrage sur environ un tiers de sa longueur.

Sur la réalisation des figures, des patins, appelés patins conventionnels 14, sont répartis le long de la zone centrale 9 et sont disposés de sorte à être destinés à être interposés entre la bande de serrage 6 et l'objet 101 à enserrer de façon que l'effort de serrage appliqué par la bande de serrage 6 sur l'objet à enserrer au niveau des patins 14 soit appliqué par l'intermédiaire des patins 14. A cet effet, les patins conventionnels 14 s'étendent au moins partiellement à l'intérieur du volume 36 délimité par la boucle formée par la bande de serrage 6.

Les patins conventionnels 14, tout comme le patin central 16 sont avantageusement réalisés en matière plastique. En variante, peuvent être en caoutchouc ou en métal.

Chaque patin conventionnel 14 présente une partie d'interface 14a située à l'intérieur de l'espace 36 délimité par la boucle et destinée à être interposée entre le patin conventionnel 14 et la bande de serrage 6 de sorte que la bande de serrage exerce, au niveau du patin 14, un effort de pression sur l'objet via la partie d'interface 14a. La forme du patin 16 est définie par rapport à ces patins. Dans ce cas, l'effort exercé sensiblement sur toute la circonférence de l'objet est sensiblement uniforme si l'effort exercé par bande via chacun des patins 14, 16 est sensiblement radial.

La partie d'interface est délimitée par une face interne 14d destinée à faire face à l'objet 101 et une face externe 14c faisant face à la bande de serrage 6. La face interne 14d suit avantageusement sensiblement la forme du périmètre de l'objet à enserrer, au niveau des patins respectifs, dans le plan T. Les patins 14 se conforment alors à l'objet à enserrer lors du serrage. Avantageusement, les patins 14 présentent une épaisseur constante selon la direction longitudinale de la bande de serrage 6. Autrement dit, les surfaces 14d et 14c présentent des sections parallèles dans le plan T. Dans le cas d'un objet à section circulaire, les faces interne 14d et 14c forment avantageusement des portions de cercles dans le plan T. La face interne 14d présente avantageusement un rayon de courbure égal à celui de l'objet à enserrer et la face externe 14c présente un rayon de courbure supérieur.

Avantageusement, les patins conventionnels présentent une section identique dans le plan transverse T. Cela favorise l'homogénéité de l'effort de serrage, en particulier lorsque la section de l'objet à enserrer est circulaire. En variante, les patins conventionnels ne sont pas tous identiques.

Avantageusement, la partie d'interface 16a du patin central 16 présente, au niveau de chaque extrémité 16c, 16d adjacente à un patin conventionnel 14, une épaisseur sensiblement égale à une épaisseur de la partie d'interface 14a du patin conventionnel adjacent au patin central 16 au niveau de l'extrémité 16c ou 16d considérée. Cela permet d'éviter que le patin central 16 ne vienne prendre toute la charge de l'objet à enserrer et ne vienne délester ses voisins recréant cette fois en deux endroits (de part et d'autre du patin central) le défaut que l'on cherche à corriger. Autrement dit, cette caractéristique favorise l'homogénéité de l'effort radial appliqué sur l'objet à enserrer le long de sa circonférence en particulier quand ce dernier présente une section circulaire. Cela est également valable lorsque le patin comprend plusieurs patins ou un patin monté sur un unique brin de bande.

En revanche, la section du patin central 16 dans le plan transverse est différente de celle des patins conventionnels 14. La forme de cette section est définie comme précisé précédemment. En variante la section du patin central 16 dans le plan transverse est identique à celle des patins centraux.

En variante, le cerclage est dépourvu de patins conventionnels 14. La partie centrale 9 vient au contact de l'objet 101 lors du serrage.

Avantageusement, le patin central 16 est monté flottant le long des brins de bande 7 et 8 de sorte à pouvoir coulisser selon les directions longitudinales des brins de bandes 7 et 8 lors des opérations de serrage et de desserrage. La partie d'interface 16a coulisse le long de ces brins de bande 7 et 8. Cela permet de favoriser l'homogénéité du serrage en permettant que le patin central 16 reste toujours centré sur le croisement des deux brins 7 et 8 du cerclage lors du serrage. Le patin central 16 trouve naturellement sa meilleure place, relativement à la bande de serrage 6 lors du serrage. Cela est également favorisé par la forme en V de la face externe 16e du patin central 16. En variante, le patin est fixe par rapport à au moins un brin de bande selon la direction longitudinale du brin de bande. Dans le cas où le dispositif comprend un patin central monté sur un seul brin de bande, le patin peut être fixe ou coulissant par rapport au brin de bande selon la direction longitudinale du brin de bande.

Avantageusement, comme c'est le cas sur l'exemple des figures 3 à 7, le patin central 16 est monté sur les brins de bande 7 et 8 au moyen d'une liaison permettant au patin central 16 de coulisser par rapport au brin de bande correspondant 7 ou 8. Le patin central 16 est monté coulissant le long du premier brin 7 selon la direction longitudinale du brin 7. Le patin central 16 est également monté coulissant le long du deuxième brin selon la direction longitudinale du brin de bande 8. Le patin central 16 est avantageusement monté sur chacun des brins de bande par une liaison qui est sensiblement une liaison glissière de sorte que le coulissement du patin central par rapport à chaque brin 7 et 8 est un mouvement de translation.

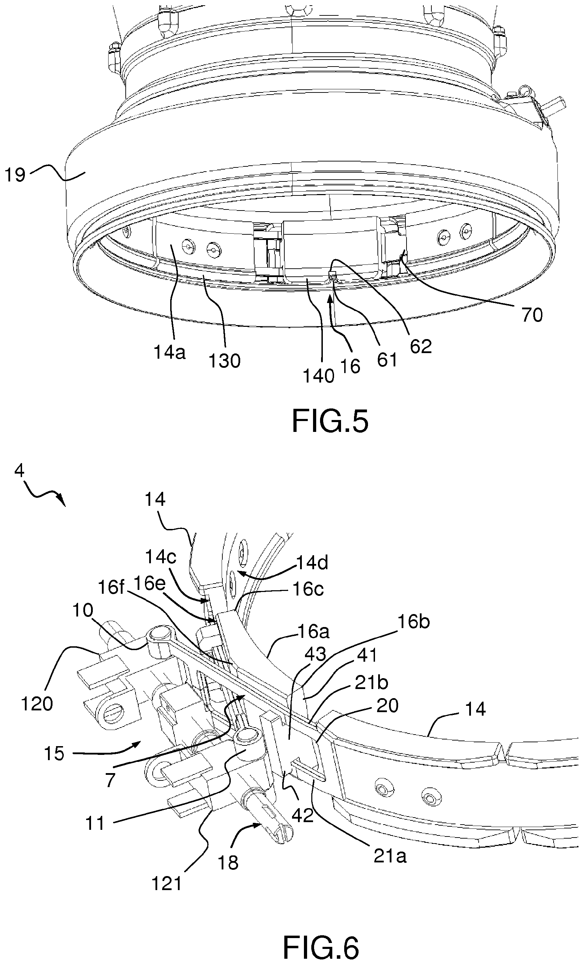

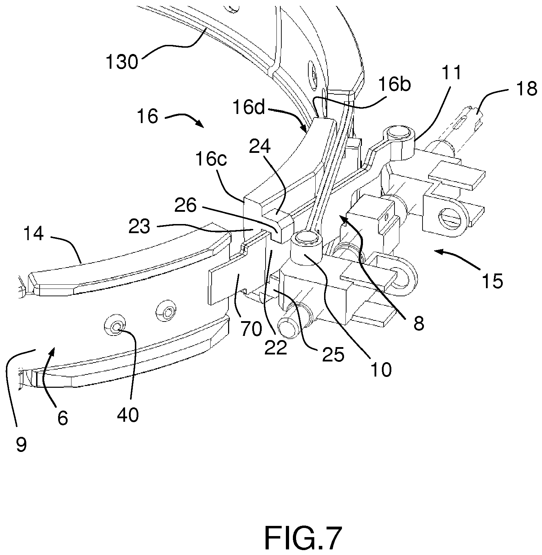

Un exemple non limitatif de réalisation est représenté plus en détails sur les figures 6 et 7 selon deux angles de vue. Dans cet exemple, les liaisons entre le patin central 16 et les brins de bande 7et 8 sont réalisées par coopération de forme entre le patin central 16 et ces brins 7 et 8. Cette configuration présente l'avantage d'être simple et bon marché et de nécessiter peu de pièces ce qui limite les risques de corrosion. Dans cet exemple, les liaisons sont des liaisons glissière.

Comme visible sur la figure 6, la bande de serrage 6 comprend une ouverture 20. L'ouverture est délimitée par deux barres 21a et 21b allongées selon la longueur du brin de bande 7. Le patin central 16 présente un profil en H comprenant deux pattes 41, 42 reliées par une barre 43, ladite barre 43 étant engagée dans l'ouverture 20 et les deux pattes 41 et 42 sont disposées d'un côté et respectivement de l'autre côté de l'ouverture 20, chaque patte 41, 42 s'étendant en regard de l'ouverture 20 et des deux barres 21a et 21b de sorte qu'une liaison glissière est formée entre le patin central 16 et le premier brin 7. Comme visible sur la figure 7, le deuxième brin 8 comprend une plaque rectangulaire 22. Le patin central 16 présente un profil en C comprenant un dos 23 et deux barres 24, 25 repliées l'une vers l'autre. Le dos 23 et les deux barres 24, 25 repliées l'une vers l'autre délimitent un canal 26 à l'intérieur duquel passe la plaque rectangulaire 22. Les deux barres 24, 25 et la plaque 22 sont dimensionnées de sorte que les deux barres 24, 25 se trouvent en regard de la plaque 22 de façon à la retenir à l'intérieur du canal 26 et de sorte qu'une liaison glissière est formée entre le patin central 16 et le deuxième brin de bande 8. En variante, il est par exemple possible de fixer à chacun des brins de bande ou au patin central des guides coopérant avec le patin ou respectivement chacun des brins pour réaliser la liaison glissière.

Le patin central 16 peut être fixe selon la direction longitudinale de chaque brin de bande sur lequel il est fixé. Le dispositif comprend par exemple au moins deux patins disposés de part et d'autre de la zone de croisement 17 et étant chacun monté sur un des brins 7 et 8 et étant fixes par rapport aux brins de bande respectifs selon leurs directions longitudinales respectives. Les patins vont alors se rapprocher l'un de l'autre lors du serrage et s'éloigner l'un de l'autre lors du desserrage.

En variante, le dispositif comprend un ou plusieurs patins centraux, chacun étant monté sur un unique brin de bande et étant monté coulissant le long du brin de bande selon sa direction longitudinale.

Le dispositif de serrage/desserrage 15 est configuré pour déplacer la bande de serrage 6 par rapport au bâti 19 visible sur la figure 4, lors du serrage et du desserrage. Avantageusement, le dispositif 15 est configuré pour déplacer les deux extrémités 10 et 11 de la bande 6 parallèlement à un axe x à la même vitesse et dans des sens contraires rapport au bâti 19. Les efforts de traction exercés sur les deux extrémités 10 et 11 sont opposés. Les déplacements des deux extrémités sont symétriques par rapport à un plan de symétrie P lié au bâti 19, par exemple, perpendiculaire au plan transverse T. Cette configuration permet d'assurer une bonne répartition des efforts exercés sur un objet à enserrer présentant une section circulaire dans le plan transverse. Par ailleurs, avec des déplacements des extrémités 10 et 11 symétriques par rapport à un plan P lié au bâti 19, la position de la zone de croisement 17 reste sur le plan de symétrie P.

En variante, les extrémités libres 10, 11 peuvent aussi subir des mouvements symétriques l'un de l'autre par rapport à un plan P, mais selon des droites inclinées par rapport au plan P. Cette configuration est moins simple à réaliser que la précédente. En variante, une seule des extrémités est déplacée par le dispositif de serrage/desserrage. Cette configuration est moins fiable, l'objet peut paraitre suffisamment serré mais les efforts exercés sur l'objet s'homogénéisent ultérieurement au serrage pouvant conduire à une libération accidentelle de l'objet.

Le dispositif de serrage/desserrage 15 comprend par exemple, comme visible sur la figure 3, un système du type vis-écrou comprenant une tige filetée 18 et deux écrous 120 et 121 en liaisons hélicoïdales avec la tige filetée et bloqués en rotation par rapport à bâti autour de l'axe x. Les écrous 120 et respectivement 121 sont solidaires des extrémités respectives 10 et 11 en translation selon l'axe x. L'écrou 120 est en prise avec un filetage 122 et l'écrou 121 est en prise avec un filetage 123. Ces filetages 122, 123 sont par exemple réalisés en sens inverses avec un même pas. Ce dispositif 15 peut comprendre un moteur 50 permettant de faire tourner la tige 18, éventuellement via un réducteur, autour de son axe par rapport à un bâti 19 et/ou une molette 52 permettant à un opérateur de faire tourner la tige par rapport au bâti éventuellement via un engrenage. En variante, le dispositif de serrage peut comprendre un système à pignon et crémaillère, ou au moins un vérin hydraulique, pneumatique ou électrique pour déplacer les extrémités 10 et 11 l'une par rapport à l'autre. De façon générale, le dispositif de serrage/desserrage 15 exerce des efforts de traction directement sur les extrémités 10 et 11 de façon à les tirer ou à les pousser pour les déplacer l'une par rapport à l'autre. Lorsque le dispositif de serrage/desserrage 15 tire sur les extrémités 10 et 11, il assure une mise en tension de la bande de serrage, d'une extrémité à l'autre.

Le patin central 16 est monté sur le bâti 19 de façon à occuper une position fixe selon une direction sensiblement perpendiculaire au plan de symétrie P. Cela permet au patin de rester centré sur la zone de croisement 17 en cas de déplacement symétrique des deux extrémités 10 et 11. A cet effet, comme visible sur la figure 5, le bâti 19 comprend, par exemple, un ergot 61 inséré dans une encoche 62 formée dans le patin central 16 de sorte à empêcher un mouvement du patin central 16 par rapport au bâti 19 selon la direction tangentielle. Par ailleurs, le patin central 16 est mobile par rapport au bâti 19 selon un axe du plan P compris dans le plan transverse T. Cet axe est un axe radial de la boucle. Ainsi, lors du serrage ou du desserrage, les angles formés par les brins de bande par rapport au plan de symétrie varient, la zone de croisement 17 des brins de bande se déplace selon le plan de symétrie, c'est-à-dire selon un axe radial et déplacent avec eux le patin central qui est en appui sur ces brins de bande. Par exemple, lors du serrage, la zone de croisement 17 et le patin central 16 se rapprochent radialement du centre de la boucle ce qui permet au dispositif d'assurer le serrage d'un objet qui n'est pas centré sur le centre de la boucle. Ce dispositif permet d'assurer le serrage d'objets présentant des diamètres différents avec une large tolérance sur les diamètres des objets.

Avantageusement, le patin est fixe par rapport au bâti selon un axe du plan P perpendiculaire au plan transverse T.

Avantageusement, les patins conventionnels 14 sont montés sur la bande de serrage 6 au moyen de moyens de montages 40, par exemple des rivets ou vis, avec un jeu de fixation de manière à ce qu'au moment du serrage d'un objet, ils trouvent naturellement leur meilleure place par rapport à la bande 6. Par exemple, les moyens de montage permettent un déplacement du patin conventionnel 14 par rapport à la bande de serrage 6 selon une direction radiale à la portion de cercle formée par la bande de serrage 6 au niveau du patin conventionnel mais pas selon la direction longitudinale de la bande de serrage 6 au niveau des moyens de montage considérés. Cette direction longitudinale est sensiblement une direction tangentielle à la bande de serrage 6 ou au cercle, dans le plan transverse T au niveau des moyens de fixation considérés. Ainsi la distance entre deux patins conventionnels 14 adjacents est fixe lors de l'opération de serrage. En variante, au moins un patin conventionnel 14 est monté coulissant par rapport à la bande de serrage 6 selon la direction longitudinale de la bande de serrage 6 au niveau des moyens de fixation considérés.

Le jeu, appelé jeu maximal, entre le patin central 16 et chaque patin conventionnel 14 adjacent au central 16, lorsque la boucle présente la taille maximale c'est-à-dire son diamètre maximal, est défini de façon qu'il reste un jeu, appelé jeu minimal opérationnel, entre le patin central 16 et chaque patin conventionnel adjacent au patin central 16 lorsque la taille de la boucle est la taille minimale. Autrement dit, le jeu maximal est supérieur à la variation de distance entre le patin et chacun des patins conventionnels adjacents au patin central 16 lorsque la boucle passe de sa taille maximale à sa taille minimale. Le jeu maximal peut être fixe lorsque le patin central est fixe par rapport au brin de bande sur lequel il est monté.

Avantageusement, le jeu maximal, qui est ici fixe, entre deux patins conventionnels adjacents 14 est inférieur au jeu maximal entre le patin central 16 et chaque patin conventionnel adjacent au patin central 16. En effet, la variation de distance entre le patin central 16 et son ou ses voisin(s) lors du serrage est plus importante qu'entre deux patins conventionnels adjacents. Par exemple, le jeu entre deux patins conventionnels adjacents est deux fois plus faible que le jeu maximal entre le patin central et les patins conventionnels.

Avantageusement, le patin central 16 est monté de façon amovible sur la bande de serrage 6. Cela permet de faciliter les opérations de maintenance du patin central 16. Avantageusement, le patin central 16 est monté amovible sur la bande de serrage 6 uniquement par coopération de forme entre le patin et la bande de serrage 6. Cela permet de limiter les étapes de montage et les risques de corrosion par limitation du nombre de pièces utilisées. A cet effet, sur les figures 6 et 7, la bande de serrage 6 comprend une partie amincie 70 disposée entre la plaque 22 et un des patins conventionnels adjacents au patin central. La partie amincie 70 est dimensionnée de façon à pouvoir s'échapper du canal 26 formé par le profil en C 23, 24, 25 du patin central 16 lorsque le profil en C fait face à la partie amincie. La partie amincie 70 présente ainsi une dimension moins importante que la plaque 22 selon une direction perpendiculaire au plan transverse T. La partie en H du patin et l'ouverture 20 sont dimensionnées de façon que lorsque la partie amincie 70 est sortie du C, il est possible de séparer le patin central 16 du premier brin 7. Il est par exemple possible sortir la patte 41 du H au travers de l'ouverture 20, après une rotation du patin central par rapport au brin 7. Cette patte 41 est située du même côté que les barres du C 24, 25 par rapport à la bande 6. La barre 41 du H présente ainsi par exemple une hauteur qui est inférieure à la dimension de l'ouverture 20 le long de la bande de serrage 6.

Avantageusement, le patin central 16 et la bande de serrage 6 sont configurés de façon à empêcher que le patin central 16 ne puisse être séparé des brins 7 et 8 en fonctionnement opérationnel. Cela permet d'éviter un démontage inopiné du patin central 16 pendant une opération de serrage ou de desserrage. Par exemple, le patin central 16 n'est démontable que lorsque la taille de la boucle est inférieure à la taille minimale. Dans l'exemple des figures, le jeu minimal entre le patin central 16 et le patin conventionnel 14 adjacent au patin central 16 et séparé de la plaque 22 par la partie amincie 70, lorsque la boucle présente la taille minimale, est alors supérieur à la distance séparant le patin conventionnel 14 et la plaque 22. Le jeu minimal entre le patin central 16 et les patins conventionnels 14 adjacents au patin central 16 est alors par exemple supérieur au jeu minimal entre deux patins conventionnels adjacents. En variante, le patin central 16 n'est démontable que lorsque la taille de la boucle est supérieure à sa taille maximale. Le blocage du patin 16 selon une direction perpendiculaire au plan P participe également à cette fonction.

Le dispositif de cerclage 4 peut présenter un limiteur de course permettant de réduire la taille de la boucle en dessous de la taille minimale et/ou d'augmenter la taille de la boucle au-delà de la taille maximale. Ce limiteur comprend par exemple, comme visible sur la figure 3, des butées 31, 32 agencées pour venir coopérer entre-elles de façon à empêcher la rotation de la tige filetée 18 par rapport au bâti 19 autour de son axe lorsque la taille atteint la taille minimale, c'est-à-dire, dans notre exemple, lorsque la distance entre les deux extrémités 10 et 11 atteint une distance maximale prédéterminée et/ou lorsque la taille de la boucle atteint la taille maximale. Les butées 31 et 32 sont agencées sur des roues d'un engrenage 33 et 34 en prise l'une avec l'autre. Le moteur 50 entraine la tige 18 en rotation autour de son axe via l'engrenage 30, par l'intermédiaire d'un réducteur 51. La fonction de limiteur peut en variante être assurée par la commande du moteur.

Avantageusement, le limiteur de course est neutralisable. De cette façon, on peut poursuivre, en maintenance, la réduction de la taille de la boucle en dessous de la taille minimale (ou l'augmentation de la taille de la boucle au-delà de la taille maximale) de façon à pouvoir séparer le patin des brins de bande. Dans l'exemple des figures, on peut réduire la taille de la boucle de façon que le jeu entre le patin central 16 et le patin conventionnel 14 adjacent au patin central 16 puisse descendre sous la distance séparant le patin central 14 adjacent et la plaque 22. Le C se retrouve face à la partie amincie 70 de sorte que la bande de serrage 6 puisse s'échapper du canal défini par le C. On peut ainsi démonter le patin. Au moins une des butées est par exemple démontable.

Avantageusement, les patins 14 et 16 comprennent chacun un épaulement ou retour 130 et respectivement 140, visible sur les figures 4, 5 et 7, faisant saillie (dans le plan transverse), sur la partie d'interface 14a ou 16a en direction de l'intérieur de la boucle, c'est-à-dire selon une direction radiale. Chaque épaulement 130 et 140 est situé d'un même côté des parties d'interface 14a et respectivement 16a selon une direction perpendiculaire au plan transverse T. Chaque épaulement 130 et 140 est par exemple sous la partie d'interface 14a et respectivement 16a correspondante, c'est-à-dire plus bas que la partie d'interface, selon une direction verticale z, lorsque le dispositif de cerclage 4 est suspendu au treuil 100. De la sorte, lors du serrage, l'épaulement 130 ou 140, vient se loger sous la structure de protection 113 pour exercer un effort vertical vers le haut de façon à empêcher un mouvement de la structure de protection 113 vers le bas, lorsque la structure de protection 113 est enserrée par la bande de serrage 106 via les patins. Cela permet d'empêcher l'antenne 101 de tomber si l'effort de serrage appliqué sur la structure de protection n'est pas suffisamment important. La réalisation des épaulements sur les patins est plus aisée et affecte moins le fonctionnement du cerclage que lorsqu'ils sont réalisés sur la bande de serrage.

Le bâti 19 délimite avantageusement une gorge 19a à section sensiblement circulaire dans le plan T et présentant un profil en C dans un plan radial perpendiculaire au plan T. Ce logement 19a reçoit la bande de serrage 6 et lui sert de guide lors des opérations de serrage et de desserrage. Avantageusement, la gorge 19a est dimensionnée de façon que les épaulements 130, 140 soient en appui sur le bâti 19 pour que ce dernier exerce, sur les patins 14, 16, un effort selon une direction perpendiculaire au plan transverse T, en fonctionnement opérationnel. La retenue de l'antenne 101 vers le haut est favorisée.

L'invention se rapporte également à un ensemble comprenant le dispositif de cerclage et l'objet à enserrer.

## Revendications

1. Dispositif de cerclage (4) pour ceinturer un objet (101) présentant une section présentant un périmètre de forme régulière, ledit dispositif comprenant un cerclage (5) comprenant une bande de serrage (6) formant une boucle destinée à entourer l'objet, la bande de serrage (6) comprenant une partie centrale (9) présentant une forme suivant sensiblement une forme du périmètre de la section de l'objet et deux brins de bande (7, 8) comprenant les extrémités respectives (10, 11) de la bande de serrage et présentant une forme s'écartant de la forme du périmètre de la section de l'objet, le cerclage comprenant au moins un patin dit central (16) monté sur au moins un brin de bande (7 ; 8) de façon à être destiné à être interposé entre l'objet (101) et le brin de bande (7 ; 8), le dispositif de cerclage comprenant un bâti (19) et un dispositif de serrage/desserrage (15) permettant d'élargir la taille de la boucle et/ou de réduire la taille de la boucle et étant configuré pour déplacer les extrémités (10, 11) de la bande de serrage de façon sensiblement symétrique par rapport à un plan de symétrie (P) lié au bâti (19), **caractérisé en ce que** le patin central (16) est monté sur le bâti (19) de façon à occuper une position fixe par rapport au bâti (19) selon une direction sensiblement perpendiculaire au plan de symétrie (P) et de façon à être mobile radialement par rapport au bâti (19).

2. Dispositif de cerclage selon la revendication précédente, dans lequel un volume libre est créé entre une forme régulière définie par la partie centrale (9) et les brins de bande (7,8), le patin central (16) occupant une partie du volume libre.

3. Dispositif de cerclage (4) selon l'une quelconque des revendications précédentes, dans lequel le patin central (16) est monté flottant le long du brin de bande (7 ; 8) de sorte à pouvoir coulisser selon une direction longitudinale du brin de bande (7 ; 8).

4. Dispositif de cerclage selon la revendication précédente, dans lequel le patin central (16) est monté coulissant le long du brin de bande (7 ; 8) par coopération de forme entre le patin central (16) et le brin de bande (7 ; 8).

5. Dispositif de cerclage selon l'une quelconque des revendications précédentes, dans lequel le patin central (16) comprend une partie d'interface (16a) destinée à être interposée entre le brin de bande (7 ; 8) et l'objet (101), la partie d'interface (16a) s'épaississant, le long du brin de bande vers l'autre brin.

6. Dispositif de cerclage selon l'une quelconque des revendications précédentes, dans lequel le patin central présente une partie d'interface, destinée à être interposée entre le brin de bande (7, 8) et l'objet (101), comprenant une face externe faisant face au brin de bande (7,8), la face externe suivant sensiblement la forme du brin de bande, selon la direction longitudinale du brin de bande.

7. Dispositif de cerclage selon l'une quelconque des revendications précédentes, dans lequel le patin central est configuré de façon que le patin central (16) vienne faire dévier le brin de bande (7,8) lorsqu'un objet (101) présentant la section de forme régulière et un diamètre prédéterminé est serré par le cerclage (5) de sorte qu'un effort de serrage est exercé sur l'objet (101) par le brin de bande (7 ; 8).

8. Dispositif de cerclage selon la revendication précédente, dans lequel la forme du patin central (16) est définie de façon que lorsque l'objet est serré par le cerclage (5), un effort de serrage sensiblement uniforme est exercé sur le patin sensiblement sur toute la circonférence de l'objet.

9. Dispositif de cerclage selon la revendication 6, dans lequel l'épaisseur d'une partie d'interface du patin central, destinée à être interposée entre le brin de bande et l'objet selon une direction radiale d'un cercle défini par la partie centrale, est supérieure à la distance séparant ce cercle et le brin de bande selon cette direction radiale en l'absence d'objet.

10. Dispositif de cerclage selon l'une quelconque des revendications précédentes, dans lequel la partie centrale (9) décrit sensiblement un arc de cercle.

11. Dispositif de cerclage (4) selon la revendication précédente, dans lequel le patin central (16) comprend une partie d'interface (16a) destinée à être interposée entre la bande de serrage (6) et l'objet à enserrer (101), la partie d'interface (16a) comprenant une face interne (16d) destinée à faire face à l'objet et décrivant sensiblement un arc de cercle.

12. Dispositif de cerclage (4) selon l'une quelconque des revendications précédentes, comprenant plusieurs patins conventionnels montés sur la partie centrale (9) de sorte à être destinés à s'étendre entre la bande de serrage (6) et l'objet (101).

13. Dispositif de cerclage selon la revendication précédente, dans lequel chaque patin conventionnel adjacent au patin central comprend une partie d'interface (14a) destinée à être interposée entre la partie centrale (9) et l'objet à enserrer (101), le patin central (16) comprenant une partie d'interface (16a) destinée à être interposée entre le brin de bande (7 ; 8) et l'objet à enserrer, la partie d'interface (16a) du patin central (16) présentant au niveau de chaque extrémité adjacente à un patin conventionnel, une épaisseur sensiblement égale à une épaisseur d'une extrémité de la partie d'interface du patin adjacent située en regard du patin central.

14. Dispositif de cerclage (4) selon l'une quelconque des revendications précédentes, dans lequel un jeu maximal prévu entre le patin central (16) et chaque patin conventionnel adjacent au patin central, en fonctionnement opérationnel, est supérieur au jeu maximal entre deux patins conventionnels adjacents (14).

15. Dispositif de cerclage (4) selon l'une quelconque des revendications précédentes, dans lequel le patin central (16) est monté de façon amovible sur la bande de serrage (6) uniquement par coopération de forme entre le patin central (16) et la bande de serrage (6).

16. Dispositif de cerclage (4) selon l'une quelconque des revendications précédentes, comprenant un limiteur de course permettant d'empêcher qu'une taille de la boucle ne descende en dessous d'une taille minimale prédéterminée ou ne dépasse une taille maximale prédéterminée en fonctionnement opérationnel, le limiteur de course étant neutralisable, le patin central (16) et la bande de serrage étant configurés de façon que le patin central (16) puisse être séparé du brin de bande uniquement lorsque la taille de la boucle est inférieure à la taille minimale ou respectivement lorsque la taille de la boucle est supérieure à la taille maximale.

17. Dispositif de cerclage (4) selon l'une quelconque des revendications précédentes, dans lequel le patin central (16) est en appui sur les deux brins de bande de façon à être destiné à être interposé entre les deux brins de bande et l'objet à enserrer (101).

18. Dispositif de cerclage (4) selon la revendication précédente, comprenant un cerclage (5) comprenant une bande de serrage (6) comprenant deux brins de bande (7, 8) se croisant, en une zone de croisement (17), de sorte que la bande de serrage définisse une boucle fermée destinée à ceinturer l'objet (101).

19. Dispositif de cerclage selon la revendication précédente, dans lequel le dispositif de cerclage comprend un dispositif de serrage/desserrage permettant de tirer ou de pousser sur les extrémités des brins de bande de façon à les déplacer l'une par rapport à l'autre.

20. Dispositif de cerclage (4) selon l'une quelconque des revendications 18 à 19, dans lequel le patin central (16) est en appui sur les deux brins de bande (7 ; 8) de part et d'autre de la zone de croisement (17) et se trouve à distance de la zone de croisement (17).

21. Dispositif de détection comprenant un dispositif de cerclage (4) selon l'une quelconque des revendications précédentes, dans lequel l'objet est une antenne (101), le dispositif de détection comprenant un treuil comprenant un câble, l'antenne étant suspendue au câble (102) et le dispositif de cerclage (4) étant suspendu au treuil.

## Patentansprüche

1. Bändelungsvorrichtung (4) zum Umgürten eines Gegenstands (101), der einen Querschnitt aufweist, der einen Umfang mit gleichmäßiger Form aufweist, wobei die Vorrichtung eine Bändelung (5) umfasst, die ein Festspannband (6) umfasst, das eine Schlinge bildet, die dazu vorgesehen ist, den Gegenstand zu umgeben, wobei das Festspannband (6) einen mittleren Teil (9), der eine im Wesentlichen einer Form des Umfangs des Querschnitts des Gegenstands folgende Form aufweist, und zwei Bandstränge (7, 8) umfasst, die die jeweiligen Enden (10, 11) des Festspannbandes umfassen und eine Form aufweisen, die sich von der Form des Umfangs des Querschnitts des Gegenstands entfernt, wobei die Bändelung mindestens einen als mittleren Gleitschuh (16) bezeichneten Gleitschuh umfasst, der derart auf mindestens einem Bandstrang (7; 8) montiert ist, dass er dafür vorgesehen ist, zwischen dem Gegenstand (101) und dem Bandstrang (7; 8) zwischengelegt zu werden, wobei die Bändelungsvorrichtung ein Gestell (19) und eine Festspann-/Lösevorrichtung (15) umfasst, die es ermöglicht, die Größe der Schlinge zu vergrößern und/oder die Größe der Schlinge zu verkleinern, und dafür konfiguriert ist, die Enden (10, 11) des Festspannbandes im Wesentlichen symmetrisch in Bezug auf eine mit dem Gestell (19) verbundene Symmetrieebene (P) zu verlagern, **dadurch gekennzeichnet, dass** der mittlere Gleitschuh (16) derart auf dem Gestell (19) montiert ist, dass er eine in Bezug auf das Gestell (19) feststehende Position entlang einer zu der Symmetrieebene (P) im Wesentlichen senkrechten Richtung einnimmt, und derart, dass er in Bezug auf das Gestell (19) radial beweglich ist.

2. Bändelungsvorrichtung nach dem vorhergehenden Anspruch, wobei ein freies Volumen zwischen einer durch den mittleren Teil (9) und den Bandsträngen (7, 8) definierten gleichmäßigen Form geschaffen ist, wobei der mittlere Gleitschuh (16) einen Teil des freien Volumens einnimmt.

3. Bändelungsvorrichtung (4) nach einem der vorhergehenden Ansprüche, wobei der mittlere Gleitschuh (16) derart schwimmend entlang des Bandstrangs (7; 8) montiert ist, dass er entlang einer Längsrichtung des Bandstrangs (7; 8) gleiten kann.

4. Bändelungsvorrichtung nach dem vorhergehenden Anspruch, wobei der mittlere Gleitschuh (16) durch Formschluss zwischen dem mittleren Gleitschuh (16) und dem Bandstrang (7; 8) entlang des Bandstrangs (7; 8) gleitend montiert ist.

5. Bändelungsvorrichtung nach einem der vorhergehenden Ansprüche, wobei der mittlere Gleitschuh (16) einen Schnittstellenteil (16a) umfasst, der dafür vorgesehen ist, zwischen dem Bandstrang (7; 8) und dem Gegenstand (101) zwischengelegt zu werden, wobei sich der Schnittstellenteil (16a) entlang des Bandstrangs zur anderen Faser hin verbreitert.

6. Bändelungsvorrichtung nach einem der vorhergehenden Ansprüche, wobei der mittlere Gleitschuh einen Schnittstellenteil aufweist, der dafür vorgesehen ist, zwischen dem Bandstrang (7, 8) und dem Gegenstand (101) zwischengelegt zu werden, umfassend eine äußere Fläche, die dem Bandstrang (7, 8) gegenüberliegt, wobei die äußere Fläche im Wesentlichen der Form des Bandstrangs entlang der Längsrichtung des Bandstrangs folgt.

7. Bändelungsvorrichtung nach einem der vorhergehenden Ansprüche, wobei der mittlere Gleitschuh derart konfiguriert ist, dass der mittlere Gleitschuh (16) eine Umlenkung des Bandstrangs (7, 8) bewirkt, wenn ein Gegenstand (101), der den Querschnitt von gleichmäßiger Form und einen vorbestimmten Durchmesser aufweist, derart von der Bändelung (5) festgespannt wird, dass von dem Bandstrang (7; 8) eine Festspannwirkung auf den Gegenstand (101) ausgeübt wird.

8. Bändelungsvorrichtung nach dem vorhergehenden Anspruch, wobei die Form des mittleren Gleitschuhs (16) derart definiert ist, dass, wenn der Gegenstand von der Bändelung (5) festgespannt wird, im Wesentlichen auf dem gesamten Umfang des Gegenstands eine im Wesentlichen gleichmäßige Festspannwirkung auf den Gleitschuh ausgeübt wird.

9. Bändelungsvorrichtung nach Anspruch 6, wobei die Dicke eines Schnittstellenteils des mittleren Gleitschuhs, das dafür vorgesehen ist, entlang einer radialen Richtung eines durch den mittleren Teil definierten Kreises zwischen dem Bandstrang und dem Gegenstand zwischengelegt zu werden, größer als der Abstand ist, der diesen Kreis und den Bandstrang entlang dieser radialen Richtung in Abwesenheit des Gegenstands trennt.

10. Bändelungsvorrichtung nach einem der vorhergehenden Ansprüche, wobei der mittlere Teil (9) im Wesentlichen einen Kreisbogen beschreibt.

11. Bändelungsvorrichtung (4) nach dem vorhergehenden Anspruch, wobei der mittlere Gleitschuh (16) einen Schnittstellenteil (16a) umfasst, der dafür vorgesehen ist, zwischen dem Festspannband (6) und dem zu umklammernden Gegenstand (101) zwischengelegt zu werden, wobei der Schnittstellenteil (16a) eine innere Fläche (16d) umfasst, die dafür vorgesehen ist, dem Gegenstand gegenüberzuliegen, und die im Wesentlichen einen Kreisbogen beschreibt.

12. Bändelungsvorrichtung (4) nach einem der vorhergehenden Ansprüche, umfassend mehrere herkömmliche Gleitschuhe, die derart auf dem mittleren Teil (9) montiert sind, dass sie dafür vorgesehen sind, sich zwischen dem Festspannband (6) und dem Gegenstand (101) zu erstrecken.

13. Bändelungsvorrichtung nach dem vorhergehenden Anspruch, wobei jeder herkömmliche Gleitschuh, der an den mittleren Gleitschuh angrenzt, einen Schnittstellenteil (14a) umfasst, der dafür vorgesehen ist, zwischen dem mittleren Teil (9) und dem zu umklammernden Gegenstand (101) zwischengelegt zu werden, wobei der mittlere Gleitschuh (16) einen Schnittstellenteil (16a) umfasst, der dafür vorgesehen ist, zwischen dem Bandstrang (7; 8) und dem zu umklammernden Gegenstand zwischengelegt zu werden, wobei der Schnittstellenteil (16a) des mittleren Gleitschuhs (16) an jedem angrenzenden Ende angrenzend an einen herkömmlichen Gleitschuh eine Dicke aufweist, die im Wesentlichen gleich einer Dicke eines Endes des Schnittstellenteils des angrenzenden Gleitschuhs ist, der sich gegenüber dem mittleren Gleitschuh befindet.

14. Bändelungsvorrichtung (4) nach einem der vorhergehenden Ansprüche, wobei ein maximales Spiel, das zwischen dem mittleren Gleitschuh (16) und jedem herkömmlichen Gleitschuh, der an den mittleren Gleitschuh angrenzt, vorgesehen ist, im operationellen Betrieb größer als das maximale Spiel zwischen zwei herkömmlichen angrenzenden Gleitschuhen (14) ist.

15. Bändelungsvorrichtung (4) nach einem der vorhergehenden Ansprüche, wobei der mittlere Gleitschuh (16) allein durch Formschluss zwischen dem mittleren Gleitschuh (16) und dem Festspannband (6) abnehmbar auf dem Festspannband (6) montiert ist.

16. Bändelungsvorrichtung (4) nach einem der vorhergehenden Ansprüche, umfassend einen Hubbegrenzer, der es ermöglicht zu verhindern, dass eine Größe der Schlinge im operationellen Betrieb unter eine minimale vorbestimmte Größe fällt oder eine maximale vorbestimmte Größe übersteigt, wobei der Hubbegrenzer ausschaltbar ist, wobei der mittlere Gleitschuh (16) und das Festspannband derart konfiguriert sind, dass der mittlere Gleitschuh (16) nur dann von dem Bandstrang getrennt werden kann, wenn die Größe der Schlinge kleiner als die minimale Größe ist bzw. wenn die Größe der Schlinge größer als die maximale Größe ist.

17. Bändelungsvorrichtung (4) nach einem der vorhergehenden Ansprüche, wobei der mittlere Gleitschuh (16) derart auf den beiden Bandsträngen abgestützt ist, dass er dafür vorgesehen ist, zwischen den beiden Bandsträngen und dem zu umklammernden Gegenstand (101) zwischengelegt zu werden.

18. Bändelungsvorrichtung (4) nach dem vorhergehenden Anspruch, umfassend eine Bändelung (5), die ein Festspannband (6) umfasst, das zwei Bandstränge (7, 8) umfasst, die sich in einer Kreuzungszone (17) kreuzen, so dass das Festspannband eine geschlossene Schlinge definiert, die dafür vorgesehen ist, den Gegenstand (101) zu umgürten.

19. Bändelungsvorrichtung nach dem vorhergehenden Anspruch, wobei die Bändelungsvorrichtung eine Festspann-/Lösevorrichtung umfasst, die es ermöglicht, an den Enden der Bandstränge derart zu ziehen oder diese zu schieben, dass sie relativ zueinander verlagert werden.

20. Bändelungsvorrichtung (4) nach einem der Ansprüche 18 bis 19, wobei der mittlere Gleitschuh (16) auf beiden Seiten des Kreuzungsbereichs (17) auf den zwei Bandsträngen (7; 8) abgestützt ist und sich in einem Abstand zu der Kreuzungszone (17) befindet.

21. Erkennungsvorrichtung, umfassend eine Bändelungsvorrichtung (4) nach einem der vorhergehenden Ansprüche, wobei es sich bei dem Gegenstand um eine Antenne (101) handelt, wobei die Erkennungsvorrichtung eine Winde umfasst, die ein Kabel umfasst, wobei die Antenne an dem Kabel (102) aufgehängt ist und die Bändelungsvorrichtung (4) an der Winde aufgehängt ist.

## Claims

1. A banding device (4) for strapping an object (101) having a cross-section with a perimeter of regular shape, said device comprising a band (5) comprising a clamping strip (6) forming a loop intended to surround the object, the clamping strip (6) comprising a central part (9) having a shape substantially following a shape of the perimeter of the cross-section of the object and two strip strands (7, 8) comprising the respective ends (10, 11) of the clamping strip and having a shape that departs from the shape of the perimeter of the cross-section of the object, the band comprising at least one so-called central pad (16) mounted on at least one strip strand (7; 8) so that it is intended to be interposed between the object (101) and the strip strand (7; 8), the banding device comprising a frame (19) and a clamping/unclamping device (15) for expanding the size of the loop and/or for reducing the size of the loop and being configured to substantially symmetrically move the ends (10, 11) of the clamping strip relative to a plane of symmetry (P) linked to the frame (19), **characterised in that** the central pad (16) is mounted on the frame (19) so as to occupy a fixed position relative to the frame (19) in a direction substantially perpendicular to the plane of symmetry (P) and so as to be radially movable relative to the frame (19).

2. The banding device according to the preceding claim, wherein a free volume is created between a regular shape defined by the central part (9) and the two strip strands (7, 8), with the central pad (16) occupying part of the free volume.

3. The banding device (4) according to any one of the preceding claims, wherein the central pad (16) is float-mounted along the strip strand (7; 8) so as to be able to slide in a longitudinal direction of the strip strand (7; 8).

4. The banding device according to the preceding claim, wherein the central pad (16) is slidably mounted along the strip strand (7; 8) by the cooperation of shapes between the central pad (16) and the strip strand (7; 8).

5. The banding device according to any one of the preceding claims, wherein the central pad (16) comprises an interface part (16a) intended to be interposed between the strip strand (7; 8) and the object (101), with the interface part (16a) becoming thicker along the strip strand towards the other strip strand.

6. The banding device according to any one of the preceding claims, wherein the central pad has an interface part intended to be interposed between the strip strand (7, 8) and the object (101), comprising an outer face facing the strip strand (7, 8), with the outer face substantially following the shape of the strip strand in the longitudinal direction of the strip strand.

7. The banding device according to any one of the preceding claims, wherein the central pad is configured so that the central pad (16) causes the strip strand (7, 8) to deviate when an object (101) with the cross-section of regular shape and a predetermined diameter is clamped by the band (5) such that a clamping force is exerted on the object (101) by the strip strand (7; 8).

8. The banding device according to the preceding claim, wherein the shape of the central pad (16) is defined so that, when the object is clamped by the band (5), a substantially even clamping force is exerted on the pad substantially over the entire circumference of the object.

9. The banding device according to claim 6, wherein the thickness of an interface part of the central pad, intended to be interposed between the strip strand and the object in a radial direction of a circle defined by the central part, is greater than the distance separating this circle and the strip strand in this radial direction in the absence of an object.

10. The banding device according to any one of the preceding claims, wherein the central part (9) substantially describes an arc of a circle.

11. The banding device (4) according to the preceding claim, wherein the central pad (16) comprises an interface part (16a) intended to be interposed between the clamping strip (6) and the object (101) to be clamped, the interface part (16a) comprising an inner face (16d) intended to face the object and substantially describing an arc of a circle.

12. The banding device (4) according to any one of the preceding claims, comprising multiple conventional pads mounted on the central part (9) so as to be intended to extend between the clamping strip (6) and the object (101).

13. The banding device according to the preceding claim, wherein each conventional pad adjacent to the central pad comprises an interface part (14a) intended to be interposed between the central part (9) and the object (101) to be clamped, the central pad (16) comprising an interface part (16a) intended to be interposed between the strip strand (7; 8) and the object to be clamped, with the thickness of the interface part (16a) of the central pad (16) being, at each end adjacent to a conventional pad, substantially equal to a thickness of an end of the interface part of the adjacent pad located facing the central pad.

14. The banding device (4) according to any one of the preceding claims, wherein a maximum clearance provided between the central pad (16) and each conventional pad adjacent to the central pad, in operational use, is greater than the maximum clearance between two adjacent conventional pads (14).

15. The banding device (4) according to any one of the preceding claims, wherein the central pad (16) is detachably mounted on the clamping strip (6) solely by the cooperation of shapes between the central pad (16) and the clamping strip (6).

16. The banding device (4) according to any one of the preceding claims, comprising a travel limiter for preventing the size of the loop from dropping below a predetermined minimum size or from exceeding a predetermined maximum size in operational use, with the travel limiter being able to be disabled, the central pad (16) and the clamping strip being configured so that the central pad (16) can be separated from the strip strand only when the size of the loop is below the minimum size or respectively when the size of the loop is above the maximum size.

17. The banding device (4) according to any one of the preceding claims, wherein the central pad (16) is in abutment on the two strip strands so as to be intended to be interposed between the two strip strands and the object (101) to be clamped.

18. The banding device (4) according to the preceding claim, comprising a band (5) comprising a clamping strip (6) comprising two strip strands (7, 8) intersecting each other at an intersection zone (17), such that the clamping strip defines a closed loop intended to strap the object (101).

19. The banding device according to the preceding claim, wherein the banding device comprises a clamping/unclamping device for pulling or pushing on the ends of the strip strands so as to move them relative to one another.

20. The banding device (4) according to any one of claims 18 to 19, wherein the central pad (16) is in abutment on the two strip strands (7; 8) on either side of the intersection zone (17) and is located at a distance from the intersection zone (17).

21. A detection device comprising a banding device (4) according to any one of the preceding claims, wherein the object is an antenna (101), the detection device comprising a winch comprising a cable, the antenna being suspended from the cable (102) and the banding device (4) being suspended from the winch.
